# EUROPÄISCHE PATENTSCHRIFT

(11) **EP 2 445 984 B1**
(45) Veröffentlichungstag und Bekanntmachung des Hinweises auf die Patenterteilung: **03.04.2013**
(21) Anmeldenummer: 10721999.0
(22) Anmeldetag: 19.05.2010
(51) Int. Cl.: C10L 3/06, C08F 220/26, C10L 3/00, C09K 8/52, C08F 220/28

(54) **ADDITIVE ZUR INHIBIERUNG DER GASHYDRATBILDUNG**
ADDITIVES FOR INHIBITING GAS HYDRATE FORMATION
ADDITIFS DESTINÉS À INHIBER LA FORMATION D'HYDRATE DE GAZ

(30) Priorität: 25.06.2009 DE 102009030339
(43) Veröffentlichungstag der Anmeldung: 02.05.2012
(73) Patentinhaber: Clariant Finance (BVI) Limited, Road Town, Tortola (VG)
(72) Erfinder: LEINWEBER, Dirk, 65779 Kelkheim (DE); RÖSCH, Alexander, 55276 Oppenheim (DE); SCHAEFFER, Carsten, 84453 Mühldorf (DE)
(74) Vertreter: Mikulecky, Klaus
(86) Internationale Anmeldenummer: PCT/EP2010/003064
(87) Internationale Veröffentlichungsnummer: WO 2010/149253

(56) Entgegenhaltungen:
- EP-A1- 0 896 123
- EP-A1- 1 339 947
- US-A1- 2004 110 877

## Beschreibung

Die vorliegende Erfindung betrifft die Verwendung eines Additivs und ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der Polymere von alkoxylierten (Meth)acrylsäurederivaten enthält.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gastmolekülen stabilisiert. Diese eisähnlichen Verbindungen können in Abhängigkeit von Druck und Gaszusammensetzung auch über den Gefrierpunkt von Wasser (bis über 25 °C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Ergasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt.

Außerdem kann die Gashydratbildung auch beim Bohrvorgang zur Erschließung neuer Gas- oder Erdöllagerstätten bei entsprechenden Druck- und Temperatur-Verhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der Wasserphase) niederer Alkoholen, wie Methanol, Glykol, oder Diethylenglykol unterdrückt werden. Der Zusatz dieser Additive bewirkt, dass die thermodynamische Grenze der Gashydratbildung nach niedrigeren Temperaturen und höheren Drücken verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen < 2 % zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Anti-Agglomerants). Die dabei eingesetzten Inhibitoren behindern dabei entweder die Keimbildung und/oder das Wachstum der Gashydratpartikel, oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Anti-Agglomerants darstellen. Von besonderer Bedeutung sind hierbei Polymere mit Kohlenstoff-Backbone, die in den Seitengruppen sowohl cyclische (Pyrrolidon- oder Caprolactamreste) als auch acyclische Amidstrukturen enthalten.

So werden in EP-A-0 668 958 ein Verfahren zur kinetischen Inhibierung der Gashydratbildung durch die Verwendung von Polyvinyllactamen mit einem Polymergewicht von M_{w} > 40.000 D, und in WO-A-9 325 798 ein solches Verfahren unter Verwendung von Polymeren und/oder Copolymeren des Vinylpyrrolidons mit einem Polymergewicht von M_{w} > 5.000 bis 40.000 D beschrieben.

EP-A-0 896 123 offenbart Gashydratinhibitoren, die Copolymere aus alkoxylierter (Meth)acrylsäure [Makromere] und cyclischen N-Vinylverbindungen enthalten können. Bei den verwendeten Makromeren handelt es sich um reine Polyethylenglykol- bzw. Polypropylenglykolmonoester der (Meth)acrylsäure.

In EP-A-1 206 510 wird die Verwendung von Polyalkylenglykol gepfropften Copolymeren aus Vinylacetat und Vinyllactamen beschrieben. Die Polyalkylenglykol-Seitenkette wird durch radikalisches Pfropfen in das Polymer eingeführt.

EP-A-1 339 947 beschreibt die Verwendung von Polymeren basierend auf endverschlossenen Polyalkoxylatestern als Gashydratinhibitoren. Die verwendeten erfindungsgemäßen Monomere weisen somit keine endständigen freien Hydroxylgruppen auf.

Die beschriebenen Additive besitzen nur eingeschränkte Wirksamkeit als kinetische Gashydratinhibitoren und/oder Anti-Agglomerants, oder sind nicht in ausreichender Menge oder nur zu hohen Preisen erhältlich.

Um Gashydratinhibitoren auch bei stärkerer Unterkühlung (Subcooling) als zurzeit möglich, d. h. weiter innerhalb der Hydratregion, oder niedrigerer Dosierung einsetzen zu können, bedarf es einer weiteren Wirkungssteigerung im Vergleich zu den Hydratinhibitoren des Standes der Technik.

Aufgabe der vorliegenden Erfindung war es also, verbesserte Additive zu finden, die sowohl die Bildung von Gashydraten verlangsamen (kinetische Inhibitoren) als auch Gashydratagglomerate klein und pumpbar halten (Anti-Agglomerants), um so ein breites Anwendungsspektrum mit hohem Wirkpotential zu gewährleisten. Zudem sollten die Additive gezielt herstellbar sein, um deren Wasser- bzw. Öllöslichkeit bezüglich der Anwendung als kinetischer Gashydratinhibitor oder Anti-Agglomerant maßschneidern zu können. Des Weiteren sollten die derzeit verwendeten thermodynamischen Inhibitoren (Methanol und Glykole), die beträchtliche Sicherheitsprobleme und Logistikprobleme verursachen, ersetzt werden können.

Wie nun überraschenderweise gefunden wurde, eignen sich Polymere, die auf gemischt alkoxylierten (Meth)acrylsäurederivaten basieren, als Gashydratinhibitoren. Die Produkte können je nach Struktur sowohl die Keimbildung und Wachstum von Gashydraten verzögern (kinetische Gashydratinhibitoren) als auch die Agglomeration von Gashydraten unterdrücken (Anti-Agglomerants).

Gegenstand der Erfindung ist daher die Verwendung von Polymeren, enthaltend zwischen 1 und 100 mol-% Struktureinheiten der Formel (1) 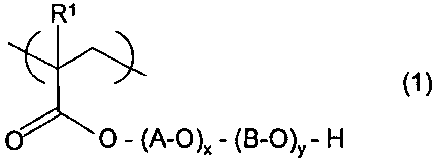 worin
- R¹: Wasserstoff oder C₁-C₆-Alkyl,
- A: C₂-C₄-Alkylengruppen und,
- B: C₂-C₄-Alkylengruppen, mit der Maßgabe, dass A von B verschieden ist, und
- x, y: unabhängig voneinander eine ganze Zahl von 1 - 100 bedeuten,

in Mengen von 0,01 bis 2 Gew.-% bezogen auf die Wasserphase als Gashydratinhibitoren, in einem zur Hydratbildung neigenden Gemisch aus Gas, Wasser und ggf. Kondensat.

Ein weiterer Gegenstand der Erfindung ist ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge, vorzugsweise 0,01 bis 2 Gew.-% bezogen auf die Wasserphase, eines Inhibitors zugegeben wird, der Polymere enthält, welche zwischen 1 und 100 mol-% Struktureinheiten der Formel (1) enthalten, 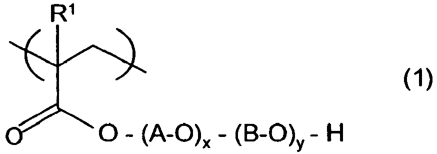 worin
- R¹: Wasserstoff oder C₁-C₆-Alkyl,
- A: C₂-C₄-Alkylengruppen und,
- B: C₂-C₄-Alkylengruppen, mit der Maßgabe, dass A von B verschieden ist, und
- x, y: unabhängig voneinander eine ganze Zahl von 1 - 100 bedeuten.

Die im Folgenden beschriebenen Ausführungsformen der Erfindung beziehen sich gleichermaßen auf die Verwendung wie auf das Verfahren.

R¹ steht in einer bevorzugten Ausführungsform der Erfindung für Wasserstoff oder Methyl.

A und B stehen für C₂-C₄-Alkylengruppen mit der Maßgabe, dass A ungleich B ist. Das heißt, dass die Struktureinheiten der Formel (1) mit bis zu 200 C₂-C₄-Alkoxyeinheiten alkoxyliert sein können, wobei es sich entweder um eine blockweise Alkoxylierung mit mindestens zweien aus Ethylenoxid, Propylenoxid oder Butylenoxid oder eine (random) Mischalkoxylierung mit mindestens zweien aus Ethylenoxid, Propylenoxid oder Butylenoxid handeln kann.

Vorzugsweise handelt es sich bei A und B um eine Ethylen- oder Propylengruppe. Besonders bevorzugt handelt es sich bei A um eine Propylengruppe und bei B um eine Ethylengruppe. Speziell handelt es sich bei A um eine Propylengruppe und bei B um eine Ethylengruppe, wobei gilt, dass x = 1 bis 5 und y = 3 bis 40.

Im Falle einer random-Mischalkoxylierung mit EO und PO liegt das Verhältnis von Ethylen- zu Propylengruppen vorzugsweise bei 5:95 bis 95:5, besonders bevorzugt bei 20:80 bis 80:20 und speziell bei 40:60 bis 60:40.

Die erfindungsgemäß zu verwendenden Polymere enthalten beispielsweise 2 bis 99, vorzugsweise 5 bis 95, insbesondere 20 bis 80 und speziell 40 bis 60 mol-% Struktureinheiten der Formel (1).

Die Polymere basierend auf Struktureinheiten der Formel (1) sind durch die Polymerisation alkoxylierter Acryl- oder Methacrylsäurederivate zugänglich (im Folgenden bezeichnet der Begriff Acrylsäure auch die Methacrylsäure). Diese sind durch Alkoxylierung von Acrylsäure oder 2-Alkylacrylsäure bzw. Acrylsäuremonoestern des Ethylenglykols, Propylenglykols oder Butylenglykols (2-Hydroxyethylacrylat, 2-Hydroxypropylacrylat oder 2-Hydroxybutylacrylat) oder 2-Alkylacrylsäuremonoestern des Ethylenglykols, Propylenglykols oder Butylenglykols (2-Hydroxyethyl-2-alkylacrylat, 2-Hydroxypropyl-2-alkylacrylat oder 2-Hydroxybutyl-2-alkylacrylat) erhältlich.

Besonders bevorzugt werden die alkoxylierten Acrylsäurederivate durch DMC-katalysierte Alkoxylierung von 2-Hydroxypropylacrylat oder 2-Hydroxypropyl-2-alkylacrylat hergestellt, speziell durch DMC-katalysierte Alkoxylierung von 2-Hydroxypropyl-2-methacrylat. Die DMC-Katalyse erlaubt im Gegensatz zur traditionellen alkalisch katalysierten Alkoxylierung eine sehr gezielte Synthese von Monomeren mit genau definierten Eigenschaften bei Vermeidung von unerwünschten Nebenprodukten. In DE-A-102006049804 und US-6034208 werden die Vorteile der DMC-Katalyse gelehrt.

In Abhängigkeit von der Struktur der Struktureinheit gemäß Formel (1) lassen sich die Eigenschaften der Polymere derart modifizieren, dass sie gezielt, entsprechend den gegebenen Bedingungen, als spezifische Additive die Gashydratbildung hemmen können.

Bei einem hohen Ethylenoxidgehalt erhält man wasserlösliche Produkte, die die Keimbildung der Gashydrate unterdrücken und als kinetische Inhibitoren wirken, bzw. die Wirkung anderer kinetischer Inhibitoren als synergistische Komponenten verstärken können.

Bei hohem Propoxylierungs- oder Butoxylierungsgrad erhält man hydrophobere/lipophilere, bedingt öllösliche Polymere mit tensidischem Charakter, die die Oberfläche von Gashydratpartikeln mit Öl benetzen und damit die Zusammenlagerung der Hydrate behindern. Sie fungieren somit als Anti-Agglomerants, welche in der Kondensatphase des Mehrphasengemisches im Allgemeinen zumindest teilweise löslich sind.

Neben den Struktureinheiten der Formel (1) können die erfindungsgemäßen Polymere, sofern sie nicht zu 100 mol-% aus den Struktureinheiten der Formel (1) bestehen, weitere, von den Struktureinheiten der Formel (1) verschiedene Struktureinheiten enthalten. Bei diesen weiteren Struktureinheiten handelt es sich um solche, die von olefinisch ungesättigten Monomeren abgeleitet sind, welche O, N, S oder P enthalten. Bevorzugt enthalten die Polymere sauerstoff-, schwefel- oder stickstoffhaltige Comonomere, insbesondere sauerstoff- oder stickstoffhaltige.

Geeignete weitere Struktureinheiten sind vorzugsweise solche, die aus Styrolsulfonsäure, Acrylamidomethylpropansulfonsäure (AMPS^{®}), Vinylsulfonsäure, Vinylphosphonsäure, Allylsulfonsäure, Methallylsulfonsäure, Acrylsäure, Methacrylsäure und Maleinsäure (und deren Anhydrid) sowie die Salze der im vorangegangenen erwähnten Säuren mit ein- und zweiwertigen Gegenionen abgeleitet sind. Bevorzugt angewendet werden als Gegenionen Lithium, Natrium, Kalium, Magnesium, Calcium, Ammonium, Monoalkylammonium, Dialkylammonium, Trialkylammonium oder Tetraalkylammonium, worin die Alkylsubstituenten der Amine unabhängig voneinander C₁ bis C₂₂-Alkylreste darstellen, die mit 0 bis 3 Hydroxyalkylgruppen besetzt sein können, deren Alkylkettenlänge in einem Bereich von C₂ bis C₁₀ variieren kann. Zusätzlich können auch ein- bis dreifach ethoxylierte Ammoniumverbindungen mit unterschiedlichem Ethoxylierungsgrad Anwendung finden. Weitere bevorzugte Gegenionen sind Pyrrolidinium-lonen, Piperidinium-Ionen und Hexamethyleniminium-lonen. Besonders bevorzugt werden Natrium und Ammonium als Gegenionen. Der Neutralisationsgrad der Molfraktion der im vorangegangenen beschriebenen Säuren kann auch von 100 % abweichen. Geeignet sind alle Neutralisationsgrade zwischen 0 und 100 %, besonders bevorzugt ist der Bereich zwischen 70 und 100 %. Weiterhin kommen als geeignete Monomere Ester der Acryl- bzw. der Methacrylsäure mit aliphatischen, aromatischen oder cycloaliphatischen Alkoholen mit einer Kohlenstoffzahl von C₁ bis C₂₂ in Frage. Weitere geeignete Monomere sind 2- und 4-Vinylpyridin, Vinylacetat, Methacrylsäureglycidylester, Acrylnitril, Vinylchlorid, Vinylidenchlorid, Tetrafluorethylen und DADMAC.

Der Anteil solcher weiterer Struktureinheiten beträgt beispielsweise 1 bis 99, bevorzugt 10 bis 80, insbesondere 20 bis 70 und speziell 40 bis 60 mol-%.

In einer Ausführungsform ergänzen sich die Struktureinheiten der Formel (1) und die weiteren Struktureinheiten zu 100 mol-%.

In einer weiteren bevorzugten Ausführungsform der Erfindung werden Copolymere verwendet, die
A) 1 bis 99 mol-% Struktureinheiten der Formel (1) und
B) 1 bis 99 mol-% Struktureinheiten der Formel (2) 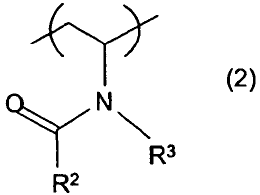
enthalten, worin R² und R³ unabhängig voneinander Wasserstoff oder C₁-C₆-Alkyl bedeuten, oder unter Einschluss des Stickstoffatoms und der Carbonylgruppe einen Ring von 5, 6 oder 7 Ringatomen bilden.

Als Beispiele sind dabei unter anderem N-Vinylformamid (NVF), N-Vinylmethylformamid, N-Vinylmethylacetamid (VIMA), N-Vinylacetamid, N-Vinylpyrrolidon (NVP), 5-Methyl-N-vinylpyrrolidon, N-Vinylvalerolactam, und N-Vinylcaprolactam zu nennen. In einer bevorzugten Ausführungsform der Erfindung leiten sich die Struktureinheiten der Formel (2) von N-Vinylacetamid, N-Methyl-N-vinylacetamid, Vinylpyrrolidon und Vinylcaprolactam ab.

Die bevorzugten Mengen an Struktureinheiten der Formel (2) liegen zwischen 2 bis 99, vorzugsweise 5 bis 95, insbesondere 20 bis 80 und speziell 40 bis 60 mol-%.

In einer Ausführungsform ergänzen sich die Struktureinheiten der Formel (1) und die Struktureinheiten der Formel (2) zu 100 mol-%.

In einer weiteren bevorzugten Ausführungsform der Erfindung werden Copolymere verwendet, die sich von
A) 1 bis 98 mol-% Struktureinheiten der Formel (1),
B) 1 bis 98 mol-% Struktureinheiten der Formel (2), und
C) 1 bis 98 mol-% Struktureinheiten, die aus einem oder mehreren der weiteren Monomere Styrolsulfonsäure, Acrylamidomethylpropansulfonsäure (AMPS), Vinylsulfonsäure, Vinylphosphonsäure, Allylsulfonsäure, Methallylsulfonsäure, Acrylsäure, Methacrylsäure und Maleinsäure oder deren Anhydrid, sowie der Salze der im vorangegangenen erwähnten Säuren mit ein- und zweiwertigen Gegenionen stammen, sowie 2- Vinylpyridin, 4-Vinylpyridin, Vinylacetat, Methacrylsäureglycidylester, Acrylnitril, Vinylchlorid, Vinylidenchlorid, Tetrafluorethylen und DADMAC, ableiten.

In einer Ausführungsform enthalten die Copolymere 20 bis 79 mol-% Struktureinheiten der Formel (1), 20 bis 79 mol-% Struktureinheiten der Formel (2), und 1 bis 40 mol-% der genannten weiteren Monomere.

In einer Ausführungsform ergänzen sich die Struktureinheiten der Formeln (1), (2) und der genannten weiteren Monomere zu 100 mol-%.

In einer weiteren bevorzugten Ausführungsform der Erfindung werden Copolymere verwendet, die sich von
A) 1 bis 98 mol-% Struktureinheiten der Formel (1),
B) 1 bis 98 mol-% Struktureinheiten der Formel (2), und
C) 1 bis 98 mol-% Struktureinheiten der Formel (3) 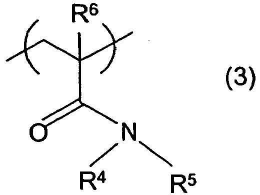 ableiten, worin R⁴ und R⁵ unabhängig voneinander Wasserstoff, C₁-C₆-Alkyl oder C₁-C₆-Cycloalkyl bedeuten, oder unter Einschluss des Stickstoffatoms einen Ring mit 5, 6 oder 7 Ringatomen bilden und R⁶ Wasserstoff oder C₁-C₆-Alkyl bedeuten, und worin die Struktureinheiten A), B) und C) sich zu 100 mol-% ergänzen.

Die bevorzugten Mengen an Struktureinheiten der Formel (3) liegen zwischen 2 bis 99, vorzugsweise 5 bis 95, insbesondere 20 bis 80 und speziell 40 bis 60 mol-%.

In einer Ausführungsform ergänzen sich die Struktureinheiten der Formeln (1), (2) und (3) zu 100 mol-%.

R²/R³ und R⁴/R⁵ enthalten vorzugsweise jeweils zusammen mindestens 1, insbesondere mindestens 2 Kohlenstoffatome.

Die Struktureinheiten der Formel (3) leiten sich vorzugsweise von (Meth)acrylsäure, (Meth)acrylamid, N-Alkyl(meth)acrylamiden, N,N-Dialkyl(meth)acrylamiden, 2-Dimethylaminomethacrylat, N-Acryloylpyrrolidin, N-Acryloylmorpholin und N-Acryloylpiperidin ab.

Die Herstellung der erfindungsgemäß zu verwendenden Polymere erfolgt durch radikalische Polymerisation der Monomeren unter Verwendung eines geeigneten Radikalstarters bei Temperaturen zwischen 50 und 150 °C. Das Molekulargewicht dieser Polymere kann sich im Bereich von 1.000 bis 10⁶ g/mol bewegen, bevorzugt sind aber Molekulargewichte zwischen 1.000 und 40.000 g/mol.

Als alkoholisches Lösungsmittel eignen sich wasserlösliche Mono- oder Dialkohole, wie z. B. Propanole, Butanole, Ethylenglykol sowie oxethylierte Monoalkohole wie Butylglycol, Isobutylglycol und Butyldiglycol. Es bilden sich nach der Polymerisation im Allgemeinen klare Lösungen.

Die Polymere können alleine oder in Kombination mit anderen bekannten Gashydratinhibitoren eingesetzt werden. Im Allgemeinen wird man dem zur Hydratbildung neigenden System soviel des erfindungsgemäßen Gashydratinhibitors zusetzen, dass man unter den gegebenen Druck- und Temperaturbedingungen eine ausreichende Inhibierung erhält. Die erfindungsgemäßen Gashydratinhibitoren werden im Allgemeinen in Mengen zwischen 0,01 und 2 Gew.-% (bezogen auf das Gewicht der wässrigen Phase), entsprechend 100 - 20.000 ppm, vorzugsweise 0,02 bis 1 Gew.-% verwendet. Werden die erfindungsgemäßen Gashydratinhibitoren in Mischung mit anderen Gashydratinhibitoren verwendet, so beträgt die Konzentration der Mischung 0,01 bis 2 bzw. 0,02 bis 1 Gew.-% in der wässrigen Phase.

### Beispiele:

Allgemeine Synthesevorschrift zur Herstellung der Polymere: In einem Kolben mit Rührer, Rückflusskühler, Innenthermometer und Stickstoffeinleitung werden die Monomere und der Molekulargewichtsregler in Lösungsmittel unter Stickstoffeinleitung in den in nachfolgender Tabelle angegebenen Gewichtsteilen vorgelegt. Dann wird die Temperatur unter Rühren auf 80 °C gebracht und innerhalb einer Stunde eine Lösung des Initiators zudosiert. Es wird noch für 3 Stunden bei dieser Temperatur weitergerührt und dann auf Raumtemperatur abgekühlt. Die so erhaltenen Polymere enthielten die Monomere A, B und C in den gleichen Gewichtsverhältnissen, in denen die Monomere vorgelegt wurden.

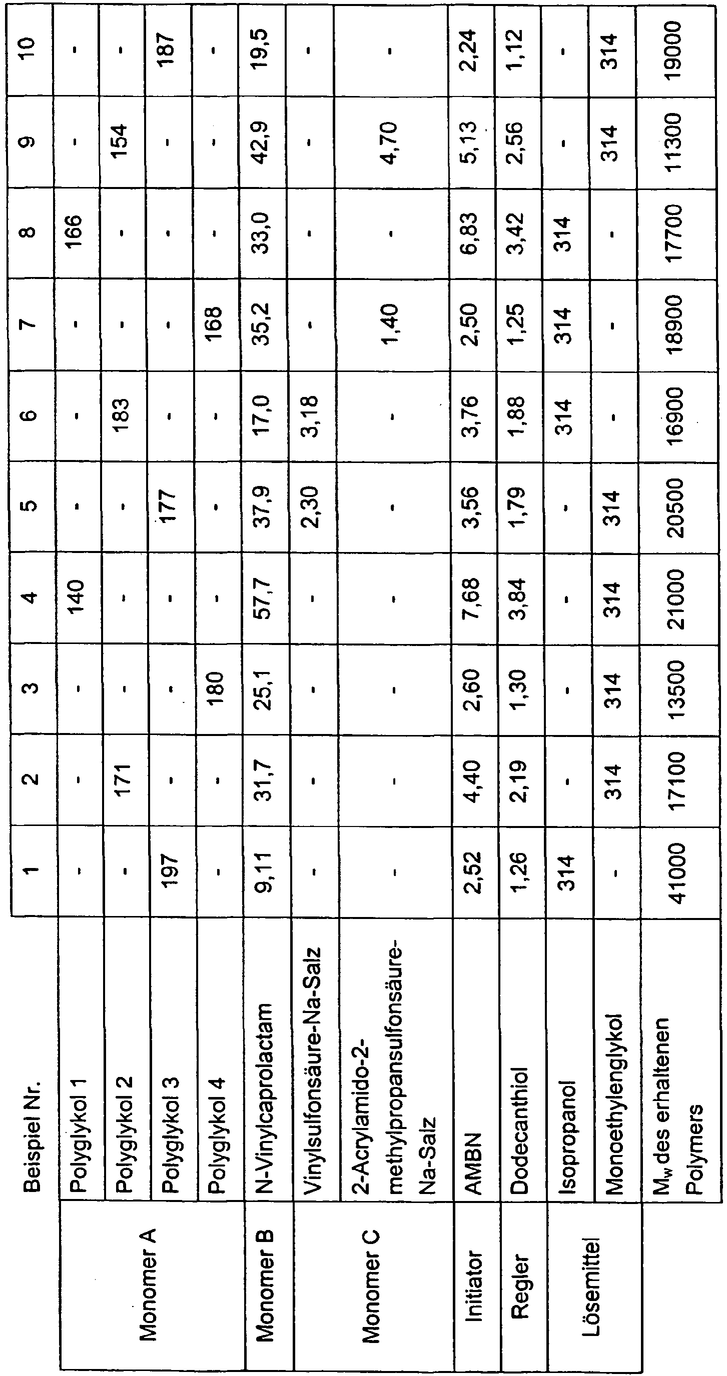

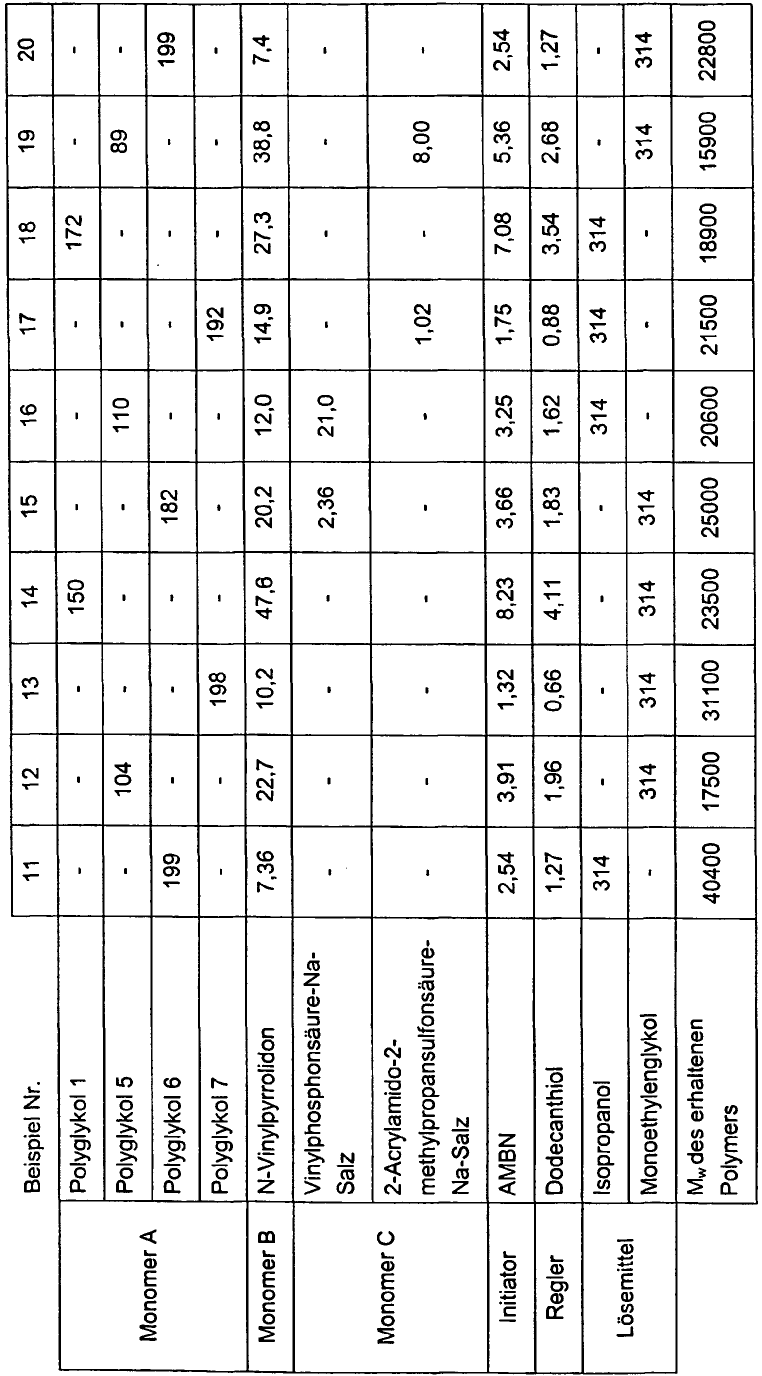

### Zusammensetzung Monomer A:

- Polyglykol 1: Polyalkylenglykolmonomethacrylsäureester der Formel (1), x = 2, y = 3-4; (A-O) entspricht [CH₂CH(CH₃)O)], (B-O) entspricht (CH₂CH₂O), Molmasse ca. 350 g/mol
- Polyglykol 2: Polyalkylenglykolmonomethacrylsäureester der Formel (1), x = 2, y = 12-13; (A-O) entspricht [CH₂CH(CH₃)O)], (B-O) entspricht (CH₂CH₂O), Molmasse ca. 750 g/mol
- Polyglykol 3: Polyalkylenglykolmonomethacrylsäureester der Formel (1), x = 2, y = 17-19; (A-O) entspricht [CH₂CH(CH₃)O)], (B-O) entspricht (CH₂CH₂O), Molmasse ca. 1000 g/mol
- Polyglykol 4: Polyalkylenglykolmonomethacrylsäureester der Formel (1), x = 2, y = 40-42; (A-O) entspricht [CH₂CH(CH₃)O)], (B-O) entspricht (CH₂CH₂O), Molmasse ca. 2000 g/mol
- Polyglykol 5: Polyalkylenglykolmonomethacrylsäureester der Formel (1), x = 5, y = 3; (A-O) entspricht [CH₂CH(CH₃)O], (B-O) entspricht (CH₂CH₂O), Molmasse ca. 510 g/mol
- Polyglykol 6: Polyalkylenglykolmonoacrylsäureester der Formel (1), x + y = 20; (A-O) und (B-O) entsprechen einer 80:20 random Mischung von (CH₂CH₂O): [CH₂CH(CH₃)O], Molmasse ca. 1000 g/mol
- Polyglykol 7: Polyalkylenglykolmonomethacrylsäureester der Formel (1), x = 20, y = 70; (A-O) entspricht [CH₂CH(CH₃)O)], (B-O) entspricht (CH₂CH₂O), Molmasse ca. 4300 g/mol
AMBN = 2,2'-Azobis(2-methylbutyronitril)

### Testergebnisse

Zur Untersuchung der inhibierenden Wirkung der Polymere wurde ein Stahlrührautoklav mit Temperatursteuerung, Druck- und Drehmomentaufnehmer mit 450 ml Innenvolumen benutzt. Für Untersuchungen zur kinetischen Inhibierung wurde der Autoklav mit destilliertem Wasser und Gas im Volumenverhältnis 40:60 gefüllt, für Untersuchungen der Agglomeratinhibierung wurde zusätzlich eine Kondensatphase zugegeben. Der Erdgas Startdruck betrug zur Evaluierung der kinetischen Inhibitoren 40 bar (4 MPa) bzw. und zur Evaluierung der Anti-Agglomerants 65 bar (6,5 MPa).

### Zusammensetzung des verwendeten Erdgases:

Methan 77,1 %, Ethan 13,6 %, Propan 3,7 %, Butan 1,0 %, Pentan 0,3 % Kohlendioxid 2,6 %, Stickstoff 1,7 %.

Ausgehend von einer Anfangstemperatur von 20 °C wurde innerhalb 3 h auf 4 °C abgekühlt. Dabei wurde zunächst eine Druckabnahme gemäß der thermischen Kompression des Gases auf ca. 36 bar (3,6 MPa) (kinetische Inhibitoren) bzw. 60 bar (6 MPa) (Anti-Agglomerants) beobachtet, welches einem Subcooling von 9 °C bzw. 14,5 °C entspricht. Tritt während der Unterkühlzeit die Bildung von Gashydratkeimen auf, so verringert sich der gemessene Druck, wobei ein Anstieg des gemessenen Drehmoments und leichter Anstieg der Temperatur zu beobachten ist. Weiteres Wachstum und zunehmende Agglomeration der Hydratkeime führt ohne Inhibitor schnell zu einem weiteren Anstieg des Drehmomentes.

Als Maß für die inhibierende Wirkung des Polymers wird die Zeit vom Erreichen der Minimaltemperatur von 4 °C bis zur ersten Gasaufnahme (T_{ind}) bzw. die Zeit bis zum Anstieg des Drehmomentes (T_{agg}) benutzt. Lange Induktionszeiten weisen auf eine Wirkung als kinetischer Inhibitor hin. Das im Autoklaven gemessene Drehmoment dient dagegen als Größe für die Agglomeration der Hydratkristalle. Bei einem gut wirksamen Anti-Agglomerant ist das Drehmoment, das sich nach Bildung von Gashydraten aufbaut, gegenüber dem Blindwert deutlich verringert. Im Idealfall bilden sich schneeartige, feine Hydratkristalle in der Kondensatphase, die sich nicht zusammenlagern und somit nicht zum Verstopfen der zum Gastransport und zur Gasförderung dienenden Installationen führen. Als Vergleichssubstanzen aus dem Stand der Technik wurden folgende Produkte herangezogen:
1. Copolymer C aus Beispiel 1 von EP0896123 = Vergleich 1
2. Beispiel 6 von EP1339947 = Vergleich 2

**Tabelle 1: Kinetische Inhibierung**

| Polymerbeispiel | Dosierung (ppm) | T_{ind} (h) |
|---|---|---|
| Blindwert | - | 0 |
| 1 | 3000 | 5,9 |
| 2 | 3000 | 12,2 |
| 3 | 3000 | 16,7 |
| 4 | 3000 | 10,2 |
| 5 | 3000 | 10,3 |
| 6 | 3000 | 14,5 |
| 7 | 3000 | 8,5 |
| 8 | 3000 | 10,0 |
| 9 | 3000 | 11,2 |
| 10 | 3000 | 10,9 |
| 11 | 3000 | 5,7 |
| 13 | 3000 | 15,3 |
| 14 | 3000 | 9,5 |
| 15 | 3000 | 5,6 |
| 17 | 3000 | 7,2 |
| 18 | 3000 | 7,6 |
| 20 | 3000 | 5,4 |
| 21 | 3000 | 6,4 |
| Vergleich 1 | 3000 | 0,5 |
| Vergleich 2 | 3000 | 1,5 |
| Vergleich 1 | 5000 | 2,0 |
| Vergleich 2 | 5000 | 6,3 |

Wie aus den obigen Testresultaten zu erkennen ist, wirken die erfindungsgemäßen Produkte, als kinetische Gashydratinhibitoren und zeigen eine deutliche Verbesserung gegenüber dem Stand der Technik.

**Tabelle 2: Wirkung als Anti-Agglomerants**

| Polymerbeispiel | Dosierung (ppm) | T_{ind} (h) | Mₘₐₓ(Ncm) |
|---|---|---|---|
| Blindwert | - | 0,1 | 15,6 |
| 12 | 3000 | 6,8 | 2,1 |
| 16 | 3000 | 7,8 | 1,9 |
| 19 | 3000 | 9,1 | 1,7 |
| Vergleich 1 | 3000 | 0,2 | 10,5 |
| Vergleich 2 | 3000 | 0,3 | 6,7 |
| Vergleich 1 | 5000 | 0,3 | 10,3 |
| Vergleich 2 | 5000 | 2,5 | 5,9 |

Wie aus diesen Beispielen zu ersehen ist, waren die gemessenen Drehmomente im Vergleich zum Blindwert trotz Hydratbildung stark reduziert. Dies spricht für eine deutliche agglomeratinhibierende Wirkung der erfindungsgemäßen Produkte. Überraschenderweise wiesen die Produkte unter den Versuchsbedingungen zusätzlich auch eine deutliche Wirkung als kinetische Inhibitoren auf.

## Patentansprüche

1. Verwendung von Polymeren, enthaltend zwischen 1 und 100 mol-% Struktureinheiten der Formel (1) 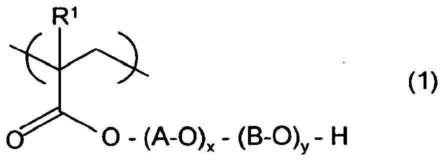 worin
R¹ Wasserstoff oder C₁-C₆-Alkyl,
A C₂-C₄-Alkylengruppen und,
B C₂-C₄-Alkylengruppen, mit der Maßgabe, dass A von B verschieden ist, und
x, y unabhängig voneinander eine ganze Zahl von 1 - 100 bedeuten,
in Mengen von 0,01 bis 2 Gew.-% bezogen auf die Wasserphase als Gashydratinhibitoren in einem zur Hydratbildung neigenden Gemisch aus Gas, Wasser und ggf. Kondensat.

2. Verwendung gemäß Anspruch 1, worin die Polymere
A) 1 bis 99 mol-% Struktureinheiten der Formel (1) und
B) 1 bis 99 mol-% Struktureinheiten der Formel (2) 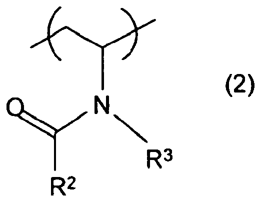 enthalten, worin R² und R³ unabhängig voneinander Wasserstoff oder C₁-C₆-Alkyl bedeuten, oder unter Einschluss des Stickstoffatoms und der Carbonylgruppe einen Ring von 5, 6 oder 7 Ringatomen bilden.

3. Verwendung gemäß Anspruch 2, worin sich die Struktureinheiten der Formel (2) von N-Vinylacetamid, N-Methyl-N-vinylacetamid, N-Vinylpyrrolidon und N-Vinylcaprolactam ableiten.

4. Verwendung gemäß Anspruch 2 und/oder 3, worin die Polymere
A) 1 bis 98 mol-% Struktureinheiten der Formel (1),
B) 1 bis 98 mol-% Struktureinheiten der Formel (2), und
C) 1 bis 98 mol-% Struktureinheiten der Formel (3) 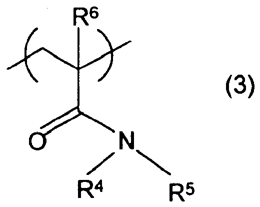 enthalten, worin R⁴ und R⁵ unabhängig voneinander Wasserstoff, C₁-C₆-Alkyl oder C₁-C₆-Cycloalkyl bedeuten und R⁶ Wasserstoff oder C₁-C₆-Alkyl bedeuten, oder unter Einschluss des Stickstoffatoms einen Ring mit 5, 6 oder 7 Ringatomen bilden.

5. Verwendung nach einem oder mehreren der Ansprüche 1 bis 4, worin die Mengen an Struktureinheiten A), B) oder C) bei 10 bis 80 mol-% liegen.

6. Verwendung nach einem oder mehreren der Ansprüche 2 bis 5, worin R²/R³ zusammen mindestens 2 Kohlenstoffatome enthalten.

7. Verwendung nach einem oder mehreren der Ansprüche 4 bis 6, worin R⁴/R⁵ zusammen mindestens 2 Kohlenstoffatome enthalten.

8. Verwendung gemäß einem oder mehreren der Ansprüche 4 bis 7, worin die Struktureinheiten der Formel (3) sich von (Meth)acrylamid, N-Alkyl(meth)acrylamiden, N,N-Dialkyl(meth)acrylamiden, 2-Dimethylaminomethacrylat, N-Acryloylpyrrolidin, N-Acryloylmorpholin und N-Acryloylpiperidin ableiten.

9. Verwendung nach einem oder mehreren der Ansprüche 1 bis 8, worin das Molekulargewicht M_{w} der Polymere im Bereich von 1.000 bis 10⁶ g/mol liegt.

10. Verwendung nach einem oder mehreren der Ansprüche 1 bis 9, wobei die Struktureinheit der Formel (1) durch DMC-Katalyse hergestellt wird.

11. Verwendung gemäß Anspruch 1, 9 und/oder 10, worin die Polymere
A) 1 bis 99 mol-% Struktureinheiten der Formel (1) und
B) 1 bis 99 mol-% Struktureinheiten, abgeleitet aus einem oder mehreren Monomeren aus der Gruppe bestehend aus Styrolsulfonsäure, Acrylamidomethylpropansulfonsäure (AMPS), Vinylsulfonsäure, Vinylphosphonsäure, Allylsulfonsäure, Methallylsulfonsäure, Acrylsäure, Methacrylsäure und Maleinsäure oder deren Anhydrid, sowie der Salze der im vorangegangenen erwähnten Säuren mit ein- und zweiwertigen Gegenionen, sowie 2- Vinylpyridin, 4-Vinylpyridin, Vinylacetat, Methacrylsäureglycidylester, Acrylnitril, Vinylchlorid, Vinylidenchlorid, Tetrafluorethylen und DADMAC, enthalten.

12. Verwendung gemäß Anspruch 2, 3, 9 und/oder 10 worin die Polymere
A) 1 bis 98 mol-% Struktureinheiten der Formel (1),
B) 1 bis 98 mol-% Struktureinheiten der Formel (2), und
C) 1 bis 98 mol-% Struktureinheiten, abgeleitet aus einem oder mehreren Monomeren aus der Gruppe bestehend aus Styrolsulfonsäure, Acrylamidomethylpropansulfonsäure (AMPS), Vinylsulfonsäure, Vinylphosphonsäure, Allylsulfonsäure, Methallylsulfonsäure, Acrylsäure, Methacrylsäure und Maleinsäure oder deren Anhydrid, sowie der Salze der im vorangegangenen erwähnten Säuren mit ein- und zweiwertigen Gegenionen, sowie 2- Vinylpyridin, 4-Vinylpyridin, Vinylacetat, Methacrylsäureglycidylester, Acrylnitril, Vinylchlorid, Vinylidenchlorid, Tetrafluorethylen und DADMAC, enthalten.

13. Verwendung nach Anspruch 11, worin im Polymer 20 bis 80 mol-% Struktureinheiten A) und 20 bis 80 mol-% Struktureinheiten B) enthalten sind.

14. Verwendung nach Anspruch 12, worin im Polymer 5 bis 90 mol-% Struktureinheiten A) 5 bis 90 mol-% Struktureinheiten B) und 5 bis 90 mol-% Struktureinheiten C) enthalten sind.

15. Verwendung nach einem oder mehreren der Ansprüche 1 bis 14, worin A eine Propylengruppe, B eine Ethylengruppe, x eine Zahl von 1 bis 5 und y eine Zahl von 3 bis 40 ist.

16. Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit 0,01 bis 2 Gew.-% bezogen auf die Wasserphase eines Inhibitors zugegeben wird, der Polymere enthält, welche zwischen 1 und 100 mol-% Struktureinheiten der Formel (1) enthalten, 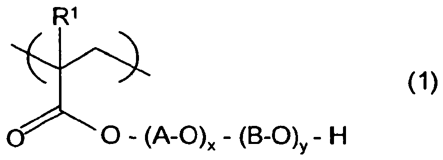 worin
R¹ Wasserstoff oder C₁-C₆-Alkyl,
A C₂-C₄-Alkylengruppen und,
B C₂-C₄-Alkylengruppen, mit der Maßgabe, dass A von B verschieden ist, und
x, y unabhängig voneinander eine ganze Zahl von 1 - 100 bedeuten.

## Claims

1. The use of polymers containing between 1 and 100 mol% of structural units of the formula (1) 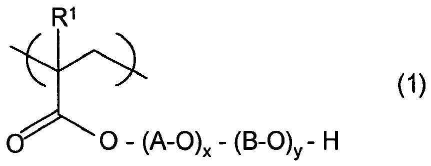 in which
R¹ is hydrogen or C₁-C₆-alkyl,
A represents C₂-C₄-alkylene groups and
B represents C₂-C₄-alkylene groups, with the proviso that A is different than B, and
x, y are each independently an integer of 1-100,
in amounts of 0.01 to 2% by weight, based on the water phase, as gas hydrate inhibitors in a mixture of gas and water, with or without condensate, which tends to form hydrates.

2. The use as claimed in claim 1, in which the polymers contain
A) 1 to 99 mol% of structural units of the formula (1) and
B) 1 to 99 mol% of structural units of the formula (2) 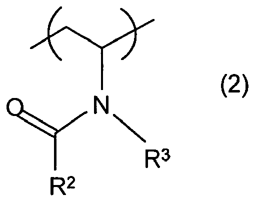 in which R² and R³ are each independently hydrogen or C₁-C₆-alkyl, or form a ring of 5, 6 or 7 ring atoms including the nitrogen atom and the carbonyl group.

3. The use as claimed in claim 2, in which the structural units of the formula (2) derive from N-vinylacetamide, N-methyl-N-vinylacetamide, N-vinylpyrrolidone and N-vinylcaprolactam.

4. The use as claimed in claim 2 and/or 3, in which the polymers contain
A) 1 to 98 mol% of structural units of the formula (1),
B) 1 to 98 mol% of structural units of the formula (2), and
C) 1 to 98 mol% of structural units of the formula (3) 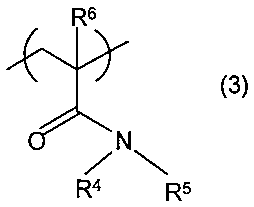 in which R⁴ and R⁵ are each independently hydrogen, C₁-C₆-alkyl or C₁-C₆-cycloalkyl, and R⁶ is hydrogen or C₁-C₆-alkyl, or form a ring with 5, 6 or 7 ring atoms including the nitrogen atom.

5. The use as claimed in one or more of claims 1 to 4, in which the amounts of structural units A), B) and C) are 10 to 80 mol%.

6. The use as claimed in one or more of claims 2 to 5, in which R²/R³ together contain at least 2 carbon atoms.

7. The use as claimed in one or more of claims 4 to 6, in which R⁴/R⁵ together contain at least 2 carbon atoms.

8. The use as claimed in one or more of claims 4 to 7, in which the structural units of the formula (3) derive from (meth)acrylamide, N-alkyl(meth)acrylamides, N,N-dialkyl(meth)acrylamides, 2-dimethylamino methacrylate, N-acryloylpyrrolidine, N-acryloylmorpholine and N-acryloylpiperidine.

9. The use as claimed in one or more of claims 1 to 8, in which the molecular weight M_{w} of the polymers is in the range from 1000 to 10⁶ g/mol.

10. The use as claimed in one or more of claims 1 to 9, wherein the structural unit of the formula (1) is prepared by DMC catalysis.

11. The use as claimed in claim 1, 9 and/or 10, in which the polymers contain
A) 1 to 99 mol% of structural units of the formula (1) and
B) 1 to 99 mol% of structural units derived from one or more monomers from the group consisting of styrenesulfonic acid, acrylamidomethylpropanesulfonic acid (AMPS), vinylsulfonic acid, vinylphosphonic acid, allylsulfonic acid, methallylsulfonic acid, acrylic acid, methacrylic acid and maleic acid or the anhydride thereof, and the salts of the aforementioned acids with mono- and divalent counterions, and also 2-vinylpyridine, 4-vinylpyridine, vinyl acetate, glycidyl methacrylate, acrylonitrile, vinyl chloride, vinylidene chloride, tetrafluoroethylene and DADMAC.

12. The use as claimed in claim 2, 3, 9 and/or 10 in which the polymers contain
A) 1 to 98 mol% of structural units of the formula (1),
B) 1 to 98 mol% of structural units of the formula (2), and
C) 1 to 98 mol% of structural units derived from one or more monomers from the group consisting of styrenesulfonic acid, acrylamidomethylpropanesulfonic acid (AMPS), vinylsulfonic acid, vinylphosphonic acid, allylsulfonic acid, methallylsulfonic acid, acrylic acid, methacrylic acid and maleic acid or the anhydride thereof, and the salts of the aforementioned acids with mono- and divalent counterions, and also 2-vinylpyridine, 4-vinylpyridine, vinyl acetate, glycidyl methacrylate, acrylonitrile, vinyl chloride, vinylidene chloride, tetrafluoroethylene and DADMAC.

13. The use as claimed in claim 11, in which the polymer contains 20 to 80 mol% of structural units A) and 20 to 80 mol% of structural units B).

14. The use as claimed in claim 12, in which the polymer contains 5 to 90 mol% of structural units A), 5 to 90 mol% of structural units B) and 5 to 90 mol% of structural units C).

15. The use as claimed in one or more of claims 1 to 14, in which A is a propylene group, B is an ethylene group, x is a number from 1 to 5 and y is a number from 3 to 40.

16. A process for inhibiting nucleation, growth and/or agglomeration of gas hydrates, by adding 0.01 to 2% by weight, based on the water phase, of an inhibitor to a polyphasic mixture which consists of water and gas, with or without condensate, and has a tendency to form hydrates, or to a drilling fluid having a tendency to form gas hydrates, said inhibitor comprising polymers which contain between 1 and 100 mol% of structural units of the formula (1), 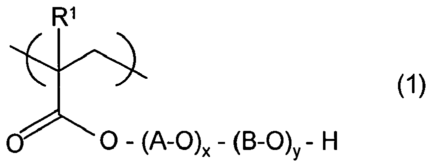 in which
R¹ is hydrogen or C₁-C₆-alkyl,
A represents C₂-C₄-alkylene groups and
B represents C₂-C₄-alkylene groups, with the proviso that A is different than B, and
x, y are each independently an integer of 1-100.

## Revendications

1. Utilisation de polymères, contenant entre 1 et 100 % en moles d'unités structurales de formule (1) 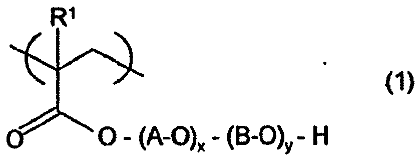 dans laquelle
les R¹ signifient hydrogène ou alkyle en C₁-C₆,
les A signifient groupes alkylène en C₂-C₄ et
les B signifient groupes alkylène en C₂-C₄, à condition qu'A soit différent de B, et
x, y signifient indépendamment l'un de l'autre un nombre entier de 1 à 100,
en quantités de 0,01 à 2 % en poids par rapport à la phase aqueuse en tant qu'inhibiteurs d'hydrates de gaz dans un mélange de gaz, d'eau et éventuellement de condensat ayant tendance à former des hydrates.

2. Utilisation selon la revendication 1, dans laquelle les polymères contiennent :
A) 1 à 99 % en moles d'unités structurales de formule (1) et
B) 1 à 99 % en moles d'unités structurales de formule (2) 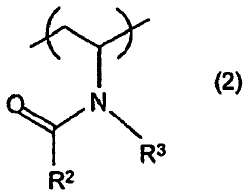 dans laquelle R² et R³ signifient indépendamment l'un de l'autre hydrogène ou alkyle en C₁-C₆, ou forment en incluant l'atome d'azote et le groupe carbonyle un cycle de 5, 6 ou 7 atomes de cycle.

3. Utilisation selon la revendication 2, dans laquelle les unités structurales de formule (2) dérivent de N-vinylacétamide, de N-méthyl-N-vinylacétamide, de N-vinylpyrrolidone et de N-vinylcaprolactame.

4. Utilisation selon la revendication 2 et/ou 3, dans laquelle les polymères contiennent :
A) 1 à 98 % en moles d'unités structurales de formule (1),
B) 1 à 98 % en moles d'unités structurales de formule (2) et
C) 1 à 98 % en moles d'unités structurales de formule (3) 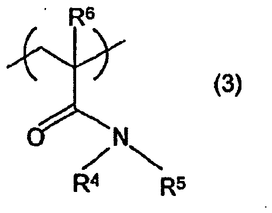 dans laquelle R⁴ et R⁵ signifient indépendamment l'un de l'autre hydrogène, alkyle en C₁-C₆ ou cycloalkyle en C₁-C₆ et les R⁶ signifient hydrogène ou alkyle en C₁-C₆, ou forment en incluant l'atome d'azote un cycle de 5, 6 ou 7 atomes de cycle.

5. Utilisation selon une ou plusieurs des revendications 1 à 4, dans laquelle les quantités d'unités structurales A), B) ou C) sont de 10 à 80 % en moles.

6. Utilisation selon une ou plusieurs des revendications 2 à 5, dans laquelle R²/R³ contiennent ensemble au moins 2 atomes de carbone.

7. Utilisation selon une ou plusieurs des revendications 4 à 6, dans laquelle R⁴/R⁵ contiennent ensemble au moins 2 atomes de carbone.

8. Utilisation selon une ou plusieurs des revendications 4 à 7, dans laquelle les unités structurales de formule (3) dérivent de (méth)acrylamide, de N-alkyl(méth)acrylamide, de N,N-dialkyl(méth)acrylamides, de 2-diméthylaminométhacrylate, de N-acryloylpyrrolidine, de N-acryloylmorpholine et de N-acryloylpipéridine.

9. Utilisation selon une ou plusieurs des revendications 1 à 8, dans laquelle le poids moléculaire M_{w} des polymères se situe dans la plage allant de 1 000 à 10⁶ g/mol.

10. Utilisation selon une ou plusieurs des revendications 1 à 9, dans laquelle l'unité structurale de formule (1) est fabriquée par catalyse DMC.

11. Utilisation selon la revendication 1, 9 et/ou 10, dans laquelle les polymères contiennent :
A) 1 à 99 % en moles d'unités structurales de formule (1) et
B) 1 à 99 % en moles d'unités structurales dérivées d'un ou de plusieurs monomères du groupe constitué par l'acide styrènesulfonique, l'acide acrylamidométhylpropanesulfonique (AMPS), l'acide vinylsulfonique, l'acide vinylphosphonique, l'acide allylsulfonique, l'acide méthallylsulfonique, l'acide acrylique, l'acide méthacrylique et l'acide maléique ou son anhydride, ainsi que les sels des acides mentionnés précédemment avec des contre-ions mono- et bivalents, ainsi que la 2-vinylpyridine, la 4-vinylpyridine, l'acétate de vinyle, l'ester glycidylique de l'acide méthacrylique, l'acrylonitrile, le chlorure de vinyle, le chlorure de vinylidène, le tétrafluoroéthylène et DADMAC.

12. Utilisation selon la revendication 2, 3, 9 et/ou 10, dans laquelle les polymères contiennent :
A) 1 à 98 % en moles d'unités structurales de formule (1),
B) 1 à 98 % en moles d'unités structurales de formule (2) et
C) 1 à 98 % en moles d'unités structurales dérivées d'un ou de plusieurs monomères du groupe constitué par l'acide styrènesulfonique, l'acide acrylamidométhylpropanesulfonique (AMPS), l'acide vinylsulfonique, l'acide vinylphosphonique, l'acide allylsulfonique, l'acide méthallylsulfonique, l'acide acrylique, l'acide méthacrylique et l'acide maléique ou son anhydride, ainsi que les sels des acides mentionnés précédemment avec des contre-ions mono- et bivalents, ainsi que la 2-vinylpyridine, la 4-vinylpyridine, l'acétate de vinyle, l'ester glycidylique de l'acide méthacrylique, l'acrylonitrile, le chlorure de vinyle, le chlorure de vinylidène, le tétrafluoroéthylène et DADMAC.

13. Utilisation selon la revendication 11, dans laquelle le polymère contient 20 à 80 % en moles d'unités structurales A) et 20 à 80 % en moles d'unités structurales B).

14. Utilisation selon la revendication 12, dans laquelle le polymère contient 5 à 90 % en moles d'unités structurales A), 5 à 90 % en moles d'unités structurales B) et 5 à 90 % en moles d'unités structurales C).

15. Utilisation selon une ou plusieurs des revendications 1 à 14, dans laquelle A est un groupe propylène, B est un groupe éthylène, x est un nombre de 1 à 5 et y est un nombre de 3 à 40.

16. Procédé d'inhibition de la nucléation, de la croissance et/ou de l'agglomération d'hydrates de gaz, par ajout à un mélange polyphasé constitué d'eau, de gaz et éventuellement de condensat ayant tendance à former des hydrates ou à un fluide de forage ayant tendance à former des hydrates de gaz, de 0,01 à 2 % en poids, par rapport à la phase aqueuse, d'un inhibiteur contenant des polymères qui contiennent entre 1 et 100 % en moles d'unités structurales de formule (1), 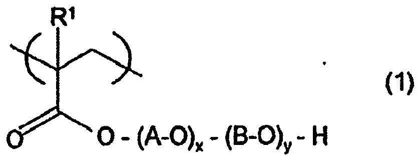 dans laquelle
les R¹ signifient hydrogène ou alkyle en C₁-C₆,
les A signifient groupes alkylène en C₂-C₄ et
les B signifient groupes alkylène en C₂-C₄, à condition qu'A soit différent de B, et
x, y signifient indépendamment l'un de l'autre un nombre entier de 1 à 100.
